# EUROPÄISCHE PATENTSCHRIFT

(11) **EP 1 544 430 B1**
(45) Veröffentlichungstag und Bekanntmachung des Hinweises auf die Patenterteilung: **06.09.2006**
(21) Anmeldenummer: 04029951.3
(22) Anmeldetag: 17.12.2004
(51) Int. Cl.: F01N 3/08, F02D 41/02, F01N 11/00

(54) **Verfahren zum Betreiben eines Stickoxid-Speicherkatalysators**
Method for operating a NOx storage catalyst
Procédé d'exploitation d'un catalyseur de stockage de NOx

(30) Priorität: 20.12.2003 DE 10360123
(43) Veröffentlichungstag der Anmeldung: 22.06.2005
(73) Patentinhaber: DaimlerChrysler AG, 70567 Stuttgart (DE)
(72) Erfinder: Franz, Jens, 70327 Stuttgart (DE); Hofmann, Uwe, 64385 Reichelsheim (DE); Trepke, Jens, 71229 Leonberg (DE); Arlt, Tino, 93059 Regensburg (DE); Bauer, Bernhard, 93167 Völling (DE); Dietl, Franz, 93053 Regensburg (DE); Hirzel, Peter, 93053 Regensburg (DE); Ludwig, Wolfgang, 35510 Butzbach-Maibach (DE); Renz, Volker, Dr., 93047 Regensburg (DE); Schwarz, Roland, Dr., 93173 Wenzenbach (DE)

(56) Entgegenhaltungen:
- EP-A- 1 039 109
- DE-A1- 10 103 557
- DE-A1- 19 910 664
- DE-A1- 19 921 972

## Beschreibung

Die Erfindung betrifft ein Verfahren zum Betreiben eines im Abgassystem einer Brennkraftmaschine eines Kraftfahrzeugs angeordneten Stickoxid-Speicherkatalysators mit den Merkmalen des Oberbegriffs des Anspruchs 1.

Aus der als nächst liegendster Stand der Technik angesehene Offenlegungsschrift DE 199 10 664 A1 ist ein Verfahren zur Entschwefelung eines Stickoxid-Speicherkatalysators bekannt, bei welchem nach einer Ermittlung des Schwefelbeladungszustand des Stickoxid-Speicherkatalysators im Falle der Zulässigkeit der Entschwefelung eine solche eingeleitet wird. Der Verlauf der Entschwefelung wird dabei unter anderem durch Verfolgung des Entschwefelungsgrades und der Abgasemissionswerte überwacht und reguliert.

Stickoxid-Speicherkatalysatoren werden gewöhnlich zur Verminderung des Stickoxidgehalts von Abgasen überwiegend mager betriebener Brennkraftmaschinen eingesetzt. Im Abgas vorhandene Schwefelverbindungen werden jedoch vom Stickoxid-Speicherkatalysator aufgenommen und führen zu dessen allmählicher Deaktivierung. Diese kann durch eine Entschwefelung zumindest teilweise wieder rückgängig gemacht werden. Zur Durchführung der Entschwefelung ist der Stickoxid-Speicherkatalysator zunächst auf eine erhöhte Temperatur zu bringen. Dies ist mit einem vergleichsweise hohen apparativen und energetischen Aufwand verbunden, weil die hierfür erforderlichen Maßnahmen eine Änderung der normalen bevorzugten Brennkraftmaschinenbetriebsparameter erfordern und somit einen erhöhten Kraftstoffverbrauch zur Folge haben.

Es ist Aufgabe der Erfindung, ein möglichst verbrauchssparendes Verfahren zum Betreiben eines Stickoxid-Speicherkatalysators anzugeben, bei welchem Beeinträchtigungen des Brennkraftmaschinenbetriebs und der Wirkung des Stickoxid-Speicherkatalysator möglichst vermieden werden.

Diese Aufgabe wird durch ein Verfahren mit den Merkmalen des Anspruchs 1 gelöst.

Das Verfahren ist dadurch gekennzeichnet, dass einerseits eine Dringlichkeit der durchzuführenden Entschwefelung und andererseits ein Aufwand der durchzuführenden Entschwefelung ermittelt wird. Ferner wird in Abhängigkeit vom Fahrzustand des Kraftfahrzeugs ein Freigabesignal für die Durchführung der Entschwefelung erzeugt, und bei Vorliegen des Freigabesignals und Vorliegen einer vorgebbaren Beziehung von Dringlichkeit und Aufwand ein Brennkraftmaschinenbetriebsparameter derart geändert, dass der Wärmeeintrag in den Stickoxid-Speicherkatalysators erhöht wird, und wenigstens die Entschwefelungstemperatur im Stickoxid-Speicherkatalysator erreicht wird oder erhalten bleibt. Zur Durchführung einer Entschwefelung muss der Stickoxid-Speicherkatalysator zunächst auf eine hierfür notwendige Mindesttemperatur, die Entschwefelungstemperatur, von etwa 600° C aufgeheizt werden. Dies ist nicht in allen Fahrzuständen möglich bzw. erfordert einen vom Fahrzustand abhängigen Aufwand. Es wird daher erfindungsgemäß zunächst ermittelt, ob der Fahrzustand es ermöglicht, die Entschwefelungstemperatur des Stickoxid-Speicherkatalysators zu erreichen. Ist dies der Fall, so wird ein Freigabesignal erzeugt und die Durchführung der Entschwefelungsprozedur wird damit zwar prinzipiell erlaubt, ist jedoch vom Vorliegen der besagten Beziehung zwischen Dringlichkeit und Aufwand abhängig. Im anderen Fall, d.h. bei Fehlen des Freigabesignals, wird die Durchführung einer Entschwefelung verboten und somit das Ergreifen von Aufheizmaßnahmen zur Durchführung der Entschwefelung unterbunden. An Stelle eines Nichtsetzen des Freigabesignals kann auch das Setzen eines Sperrsignals erfolgen. Als den Fahrzustand beschreibende Parameter werden in diesem Zusammenhang sowohl die Fahrzeuggeschwindigkeit als auch die Gesamtheit der den Brennkraftmaschinenbetrieb charakterisierenden Brennkraftmaschinenbetriebsparameter, wie Drehzahl, Last, Luftkraftstoffverhältnis, Kühlmitteltemperatur und dergleichen verstanden. Das Erzeugen eines Freigabesignals kann jedoch auch beispielsweise unterbleiben, wenn festgestellt wird, dass die Durchführung einer Entschwefelung zu einer nicht tolerierbaren Beeinträchtigung des Fahrkomforts führen würde oder führen könnte.

Dadurch, dass die Dringlichkeit und der Aufwand für eine Entschwefelung ermittelt und miteinander in Beziehung gebracht, vorzugsweise ins Verhältnis gesetzt werden, kann die Anzahl der Entschwefelungen minimiert werden. Einerseits unterbleiben dadurch Entschwefelungen, wenn eine geringe Dringlichkeit vorliegt, auch wenn hierfür nur ein geringer Aufwand erforderlich ist. Andererseits wird erreicht, dass die Entschwefelungen trotz eines hohen Aufwands durchgeführt werden können, wenn sie vergleichsweise dringend notwendig sind. Auf diese Weise wird einerseits der Kraftstoffmehrverbrauch gering gehalten, andererseits eine hohe Aktivität des Stickoxid-Speicherkatalysators gewährleistet.

Um die Entschwefelung zu ermöglichen, wird erfindungsgemäß ein Brennkraftmaschinenbetriebsparameter derart geändert, dass der Wärmeeintrag in den Stickoxid-Speicherkatalysator erhöht wird, und wenigstens die Entschwefelungstemperatur im Stickoxid-Speicherkatalysator erreicht wird oder erhalten bleibt. Hierfür sind eine Mehrzahl von Brennkraftmaschinenbetriebsparameter geeignet, welche einzeln oder zusammen geändert werden können, um den gewünschten Heizeffekt zu erzielen. Beispielsweise können Veränderungen des Zündwinkels, der Einspritzparameter oder des Luft-Kraftstoffverhältnisses vorgenommen werden. Ebenfalls möglich ist es, eine ansaugseitige oder abgasseitige Drosselung vorzunehmen.

Wesentlich ist es, für die Dringlichkeit der Entschwefelung einen Dringlichkeitsparameter bzw. eine die Dringlichkeit kennzeichnende Kennzahl einzuführen, so dass die Dringlichkeit für eine Entschwefelung quantifiziert werden kann. Analog ist es wesentlich, für den Aufwand der durchzuführenden Entschwefelung einen Aufwandsparameter bzw. eine den Aufwand kennzeichnende Kennzahl einzuführen, so dass der Aufwand für eine Entschwefelung quantifiziert werden kann.

In Ausgestaltung der Erfindung wird für die Dringlichkeit und den Aufwand für eine Entschwefelung eine wechselseitige funktionale Abhängigkeit vorgegeben. Vorzugsweise werden mit dieser funktionalen Abhängigkeit Zustandskollektive definiert, bei welchen eine Entschwefelung durch Aufheizen des Stickoxid-Speicherkatalysators eingeleitet wird, bzw. bei welchen eine Entschwefelung unterbleibt. Vorteilhaft ist es, wenn diese vorgebbare funktionale Abhängigkeit in Abhängigkeit von der Laufzeit der Brennkraftmaschine oder des Stickoxid-Speicherkatalysators veränderbar ist. Damit kann auf irreversible Deaktivierungserscheinungen reagiert werden. Beispielsweise kann eine irreversible Alterung des Stickoxid-Speicherkatalysators mit einer irreversiblen Verminderung der Stickoxid-Speicherfähigkeit eintreten, was häufigere Entschwefelungen notwendig macht. Wird dieses festgestellt, so wird die funktionale Abhängigkeit von Dringlichkeit und Aufwand, welche für die Einleitung und Durchführung einer Entschwefelung maßgebend ist, entsprechend angepasst.

In weiterer Ausgestaltung der Erfindung wird die Dringlichkeit für eine durchzuführende Entschwefelung wenigstens aus dem Ausmaß der Deaktivierung des Stickoxid-Speicherkatalysators abgeleitet. Dabei wird das Ausmaß der Deaktivierung vorzugsweise aus dem erreichten Stickoxidumsatz im Normalbetrieb oder bei einer Referenzmessung und einem Vergleich mit dem Stickoxidumsatz eines nicht deaktivierten Stickoxid-Speicherkatalysators ermittelt. Hierfür kann beispielsweise der Stickoxidumsatz eines Stickoxid-Speicherkatalysators im Neuzustand als Vergleichswert herangezogen werden. Die Dringlichkeit für eine Entschwefelung orientiert sich daher eng an der tatsächlichen Leistungsfähigkeit des Stickoxid-Speicherkatalysators. Dies ermöglicht eine am tatsächlichen Bedarf orientierte Durchführung von Entschwefelungen.

In weiterer Ausgestaltung der Erfindung wird der Aufwand für eine durchzuführende Entschwefelung wenigstens aus der maximal erreichbaren Temperatur des Stickoxid-Speicherkatalysators abgeleitet. Diese ist maßgeblich durch die aktuelle Katalysatortemperatur und die temperatursteigernde Wirkung der vorgesehenen Änderungen der Brennkraftmaschinenbetriebsparameter bestimmt. Es versteht sich, dass die maximal erreichbare Temperatur des Stickoxid-Speicherkatalysators über der Entschwefelungstemperatur liegen muss, was vorzugsweise bereits bei der Ermittlung des Freigabesignals festgestellt wird. Es kann daher vorgesehen sein, dass das Freigabesignal erst dann erzeugt wird, wenn festgestellt wird, dass der Stickoxid-Speicherkatalysator prinzipiell auf oder über seine Entschwefelungstemperatur gebracht werden kann. Je höher die maximal erreichbare Temperatur des Stickoxid-Speicherkatalysators ist, desto geringer ist der Aufwand, die für die Entschwefelung notwendige Entschwefelungstemperatur zu erreichen, und desto geringer ist der erforderliche Energiebedarf bzw. Aufwand.

In weiterer Ausgestaltung der Erfindung unterbleibt bei Unterschreiten einer vorgebbaren Mindestfahrstrecke seit der zuletzt durchgeführten Entschwefelung die Erzeugung eines Freigabesignal. Die Durchführung einer Entschwefelung wird demgemäß nur zugelassen, wenn die Mindestfahrstrecke erreicht bzw. überschritten wird. Damit wird vermieden, dass trotz Vorliegen günstiger Bedingungen für eine Entschwefelung eine solche durchgeführt wird, da aufgrund der geringen Gesamtfahrstrecke angenommen werden kann, dass die Durchführung einer Entschwefelung im weiteren Verlauf des Fahrbetriebs effizienter ist. Auf diese Weise wird daher ein unnötiger Kraftstoffmehrverbrauch vermieden.

Im Folgenden wird die Erfindung anhand von Zeichnungen und zugehörigen Beispielen näher erläutert. Dabei zeigen:
- Fig. 1: schematisch dargestellt eine Brennkraftmaschine mit einem Abgassystem mit Stickoxid-Speicherkatalysator und
- Fig. 2: ein schematisches Diagramm zur Erläuterung der zu treffenden Entscheidung über die Durchführung einer Entschwefelung.

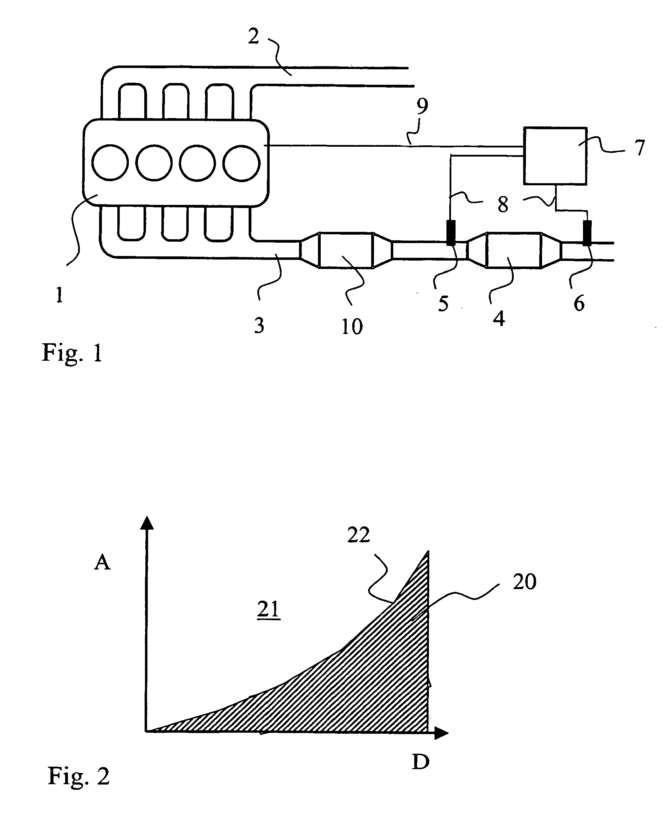

In der Fig.1 ist eine Brennkraftmaschine 1 mit einer Ansaugluftleitung 2 und einer Abgasleitung 3 dargestellt. Die Brennkraftmaschine 1 ist vorzugsweise als magerlauffähiger, direkteinspritzender Ottomotor ausgebildet. In der Abgasleitung 3 ist ein Vorkatalysator 10 vorzugsweise brennkraftmaschinennah angeordnet. Der Vorkatalysator 10 ist bevorzugt als Oxidationskatalysator oder als Drei-Wege-Katalysator ausgebildet, der eine gewisse Sauerstoffspeicherfähigkeit aufweisen kann. Stromab des Vorkatalysators 10 ist ein Stickoxid-Speicherkatalysator 4 in der Abgasleitung 3 angeordnet. Eingangsseitig des Stickoxid-Speicherkatalysators 4 ist ein Temperatursensor 5 und ausgangsseitig des Stickoxid-Speicherkatalysators 4 ist ein Stickoxidsensor 6 in der Abgasleitung 3 angeordnet. Die Sensoren 5, 6 sind über Signalleitungen 8 an ein elektronisches Steuergerät 7 angeschlossen, das zur Steuerung bzw. Regelung des Brennkraftmaschinenbetriebs über eine Steuerleitung 9 an die Brennkraftmaschine 1 angeschlossen ist. Das Steuergerät 7 steht ferner mit weiteren hier nicht dargestellten Sensoren und Aktuatoren zur Erfassung und Einstellung des Brennkraftmaschinenbetriebs und des Fahrzustands des Kraftfahrzeugs in Verbindung. Das Steuergerät 7 ist insbesondere in der Lage, Eingriffe in den Brennkraftmaschinenbetrieb vorzunehmen, welche einen erhöhten Wärmeeintrag in die Katalysatoren 10, 4 bewirken. Hierzu gehören in erster Linie Änderungen der Einspritzparameter wie Einspritzzeitpunkt und Einspritzdauer. Ferner können der Zündzeitpunkt und die Luftverhältniszahl des der Brennkraftmaschine 1 zugeführten Luft-Kraftstoffgemisches eingestellt werden, wozu entsprechende, hier nicht näher dargestellte Einstellorgane vorgesehen sind. Nachfolgend wird in diesem Zusammenhang vereinfachend von Heizmaßnahmen gesprochen. Somit ist das Steuergerät 7 in der Lage, alle betriebsrelevanten Betriebsparameter der Brennkraftmaschine 1 und des Abgassystems zu ermitteln. Das Steuergerät 7 verfügt ferner über Kennfelder und/oder Berechnungsroutinen, welche es erlauben, den Einfluss geänderter Betriebsparameter bzw. von Heizmaßnahmen abzuschätzen bzw. vorherzubestimmen. Insbesondere können der Kraftstoffverbrauch und die Temperatur des Stickoxid-Speicherkatalysators 4 in Abhängigkeit von den zu treffenden Heizmaßnahmen abgeschätzt werden.

Vorzugsweise im Teillastbereich wird die Brennkraftmaschine in einem Mager-Fett-Wechselbetrieb mit möglichst langen Magerphasen und demgegenüber kürzeren Fettphasen betrieben. In der verbrauchsgünstigen mageren Phase des Mager-Fett-Wechselbetriebs der Brennkraftmaschine 1 entzieht das als Speicherkomponente im Stickoxid-Speicherkatalysator 4 beispielsweise vorhandene Bariumcarbonat dem dann oxidierenden Abgas Stickoxid (NOx) unter Bildung von Bariumnitrat. Auf Grund der damit verbundenen Materialerschöpfung wird von Zeit zu Zeit eine Regeneration des Katalysators 4 notwendig. Diese sogenannte Nitratregeneration geschieht dadurch, dass die Brennkraftmaschine 1 in einer Fettphase für eine gewisse Zeit fett betrieben wird. Das in dem resultierenden reduktionsmittelhaltigen und reduzierend wirkenden Abgas instabile Bariumnitrat zersetzt sich hierbei wieder unter Rückbildung von Bariumcarbonat und unter Freisetzung von NOx. Letzteres wird von den dann im Abgas vorhandenen Reduktionsmitteln an der auf dem Stickoxid-Speicherkatalysator 4 aufgebrachten Edelmetallkomponente überwiegend zu unschädlichem Stickstoff reduziert. Die Nitratregeneration wird eingeleitet, wenn die Aufnahmefähigkeit des Speichermaterials in der Magerphase soweit abgesunken ist, dass ein unerwünscht hoher NOx-Schlupf auftritt, welcher vom Stickoxidsensor 6 messtechnisch erfasst und als solcher vom Steuergerät 7 erkannt wird. Unter Berücksichtigung des Abgasmassenstroms und weiterer dem Steuergerät 7 zur Verfügung stehender Größen sowie des Ausgangssignals des Stickoxidsensor 6 kann vom Steuergerät 7 die in der Magerphase des Mager-Fett-Wechselbetriebs der Brennkraftmaschine 1 aus dem Stickoxid-Speicherkatalysator 4 strömende NOx-Menge ermittelt werden. Das Steuergerät 7 ist deshalb auch in der Lage, eine Deaktivierung des Stickoxid-Speicherkatalysators 4 zu ermitteln und zu quantifizieren.

Im Abgas enthaltene Schwefeloxide werden vom Stickoxid-Speicherkatalysator 4 jedoch ebenfalls absorbiert, was die Stickoxidspeicherkapazität vermindert. Die dabei hauptsächlich entstehenden Sulfate weisen eine höhere Stabilität als die Nitrate auf, weshalb der in Sulfatform gebundene Schwefel während der Nitratregenerationen nur in geringem Maße oder gar nicht ausgetragen wird. Es tritt daher im Laufe der Zeit ein zunehmende Deaktivierung des Stickoxid-Speicherkatalysators auf. In einer Entschwefelungsprozedur können die Sulfate zersetzt werden und die infolge der Schwefeleinlagerung erfolgte Deaktivierung rückgängig gemacht werden. Dieser Entschwefelungsvorgang erfordert die Einstellung vergleichsweise hoher Temperaturen und eine Bereitstellung reduzierend wirkender Abgase. Die Entschwefelung ist auf Grund der genannten erforderlichen Bedingungen mit einem erhöhten apparativen und energetischen Aufwand verbunden und zudem nicht in allen Fahrzuständen durchführbar.

Erfindungsgemäß ist es vorgesehen, die Entscheidung über die Einleitung bzw. Durchführung der Entschwefelung von verschiedenen Kriterien abhängig zu machen.

Zunächst ist es vorgesehen, verschiedene Kriterien zu definieren, welche für eine Entscheidung über die Zulässigkeit einer Entschwefelung maßgebend sind. Nachfolgend werden für diese Entscheidung bevorzugte Freigabekriterien genannt, deren Eintreten vom Steuergerät 7 festgestellt wird und zur Erzeugung eines Freigabesignals führt. Entsprechend kann bei einem Nichteintreten der Freigabekriterien ein Sperrsignal erzeugt und eine Entschwefelung generell unterbunden werden. Zweckmäßigerweise wird das Fehlen des Freigabesignals im Sinne des Vorliegens eines Sperrsignals interpretiert.

Vorzugsweise wird zunächst ermittelt, ob entsprechende Heizmaßnahmen es erlauben, den Stickoxid-Speicherkatalysator 4 auf eine Temperatur zu bringen, welche oberhalb einer vorgebbaren Entschwefelungstemperatur von etwa 600° C liegt. Hierfür wird vom Steuergerät 7 die Temperatur des Stickoxid-Speicherkatalysators 4 ermittelt, was anhand des Signals des Temperatursensors 5 oder anhand des aktuellen Lastzustands geschehen kann. Weiter wird ermittelt, welche Temperatursteigerung eine Änderung von Brennkraftmaschinenbetriebsparametern zur Folge hat. Dabei ist es vorteilhaft, für die änderbaren Betriebsparameter der Brennkraftmaschine 1 zulässige und unzulässige Bereiche vorzusehen. Wird vom Steuergerät 7 ermittelt, dass für den Stickoxid-Speicherkatalysator eine Temperatur oberhalb der Entschwefelungstemperatur erreichbar ist, so wird ein Freigabesignal erzeugt.

Vorteilhaft ist es, wenn neben dem genannten Kriterium weitere Kriterien abgefragt werden, welche zusätzlich ebenfalls erfüllt sein müssen, damit eine Entschwefelung prinzipiell zugelassen und ein Freigabesignal erzeugt wird.

Hierzu gehört beispielsweise die Fahrzeuggeschwindigkeit, welche für ein Freigabesignal einen applizierbaren Schwellenwert überschreiten muss. Mit dieser Maßnahme kann erreicht werden, dass eine Entschwefelung nur außerorts durchführbar ist und damit Geruchsbelästigungen bei einer eventuellen Freisetzung von Schwefelwasserstoff bei der Durchführung der Entschwefelung innerorts bei geringen Fahrgeschwindigkeiten ausgeschlossen sind. Um die Zuverlässigkeit der Aussage über die erreichbare Temperatur des Stickoxid-Speicherkatalysators abzusichern, kann ferner vorgesehen sein, einen bzw. mehrere Geschwindigkeitsschwellenwerte vorzugeben, welche für vorbestimmte Zeitspannen überschritten werden müssen. Hiermit wird sichergestellt, dass erst bei einer ausreichenden Durchwärmung des Stickoxid-Speicherkatalysators eine Entschwefelung zugelassen wird. Zusätzlich oder alternativ kann vorgesehen sein, ein Freigabesignal zu erzeugen, wenn ein gleitender Mittelwert der Fahrgeschwindigkeit einen vorgebbaren Schwellenwert überschreitet. Dabei kann zusätzlich die Zeitkonstante für die Bildung des gleitenden Mittelwerts frei wählbar sein.

Weiter kann als zusätzlich zu erfüllende Bedingung die Fahrstrecke seit der letzten Entschwefelung herangezogen werden. Bei Überschreitung einer vorgebbaren Mindestfahrstrecke wird eine Aufheizung zur Entschwefelung zugelassen, andernfalls untersagt. Ferner kann die im Falle einer Entschwefelung zu erwartende Einbuße des Fahrkomfort abgefragt werden.

Falls die Zulässigkeit von Heizmaßnahmen zur Durchführung einer Entschwefelung auf Grund eines positiven Freigabesignals gegeben ist, wird vom Steuergerät 7 die Dringlichkeit und der Aufwand hierfür ermittelt. Stehen Dringlichkeit und Aufwand in einem vorgebbaren Verhältnis zueinander, so werden ausgesuchte Heizmaßnahmen ergriffen. Das heißt, es werden ausgesuchte Brennkraftmaschinenbetriebsparameter so geändert, dass sich ein erhöhter Wärmeeintrag in den Stickoxid-Speicherkatalysator 4 ergibt und seine Entschwefelungstemperatur erreicht bzw. gehalten wird.

Vorzugsweise wird sowohl für die Dringlichkeit als auch für den Aufwand eine Kennzahl ermittelt. Auf bevorzugte Vorgehensweisen zur Ermittlung der Dringlichkeitskennzahl und der Aufwandskennzahl wird weiter unten eingegangen. Weiter ist es vorteilhaft, eine funktionale Abhängigkeit von Dringlichkeitskennzahl und Aufwandskennzahl vorzugeben, welche die Zulässigkeit von Heizmaßnahmen bestimmt. In Fig. 2 ist ein Diagramm schematisch dargestellt, welches die Vorgehensweise verdeutlicht.

Im Diagramm der Fig. 2 ist eine Abhängigkeit der Aufwandskennzahl A von der Dringlichkeitskennzahl D schematisch angegeben. Dabei repräsentiert die Kurve 22 die vorgebbare funktionale Abhängigkeit A = f(D) der Aufwandskennzahl A von der Dringlichkeitskennzahl D. Durch die Kurve 22 sind ein unterhalb liegender Bereich 20 und ein oberhalb liegender Bereich 21 definiert, welche Zustandskollektiven zugeordnet sind, bei welchen eine Entschwefelung zugelassen wird (Bereich 20) bzw. verboten wird (Bereich 21). Es versteht sich, dass die Kurve 22 einen beliebig vorgebbaren Verlauf, beispielsweise einen nichtstetigen Verlauf mit Sprungstellen aufweisen kann. Bevorzugt ist die funktionale Abhängigkeit A = f(D) im Sinne eines möglichst geringen Kraftstoffmehrverbrauchs vorgegeben. Vorteilhaft ist es ferner, wenn der Verlauf der Kurve adaptierbar ist, und beispielsweise bei einer irreversible Alterung des Stickoxid-Speicherkatalysators 4 entsprechend angepasst werden kann. Vorzugsweise wird die Abhängigkeit A = f(D) so vorgegeben, dass sich eine insgesamt bzw. zumindest abschnittsweise ansteigende Kurve 22 ergibt. Dies bedeutet, dass bei einer vergleichsweise kleinen Dringlichkeitskennzahl D Aufheizmaßnahmen zur Entschwefelung nur ergriffen werden, wenn der entsprechende Aufwand gering ist, die Aufwandskennzahl A demgemäß ebenfalls klein ist. Entsprechend werden bei Vorliegen einer großen Dringlichkeitskennzahl D Aufheizmaßnahmen zur Entschwefelung auch bei Vorliegen einer großen Aufwandskennzahl A ergriffen.

Zur Beurteilung der Dringlichkeit einer durchzuführenden Entschwefelung bzw. zur Ermittlung der Dringlichkeitskennzahl D wird bevorzugt die Aktivität des Stickoxid-Speicherkatalysators 4 laufend oder von Zeit zu Zeit überprüft. Vorzugsweise erfolgt dies bei vorgebbaren definierten Betriebsbedingungen der Brennkraftmaschine 1. Beispielsweise kann mit Hilfe des Stickoxidsensors 6 der Stickoxidschlupf in einer mageren Stickoxidspeicherphase hinsichtlich seiner Größe oder seines zeitlichen Verlaufs ausgewertet werden. Auf diese Weise kann ein Verlust der Stickoxidspeicherfähigkeit auf Grund einer Schwefeldeaktivierung festgestellt und quantifiziert werden. Die Dringlichkeitskennzahl D wird dann etwa proportional zum festgestellten Verlust der Stickoxidspeicherfähigkeit festgelegt. Es versteht sich, dass dies auch anhand eines rechnerischen Modells geschehen kann. Beispielsweise können zur Ermittlung der Dringlichkeitskennzahl D der Kraftstoffverbrauch bzw. die Fahrtstrecke seit der letzten Entschwefelung herangezogen werden. In diesem Zusammenhang ist es vorteilhaft, den Schwefelgehalt des Kraftstoffs ebenfalls zu berücksichtigen.

Im realen Fahrbetrieb kann es vorkommen, dass Heizmaßnahmen ergriffen werden um eine Entschwefelung einzuleiten bzw. durchzuführen und der Vorgang vorzeitig abgebrochen wird. Dies kann durch den aktuellen Betriebszustand bzw. durch das Setzen eines Sperrsignals bedingt sein. Es ist daher vorteilhaft, die Anzahl der unvollständigen Entschwefelungsvorgänge bei der Festlegung der Dringlichkeitskennzahl D zu berücksichtigen. Die insgesamt seit der letzten erfolgreichen Entschwefelung abgelaufene Zeit, bei welcher Heizmaßnahmen ergriffen wurden, kann ebenfalls berücksichtigt werden.

Zur Beurteilung des Aufwands einer durchzuführenden Entschwefelung bzw. zur Ermittlung der Aufwandskennzahl A wird bevorzugt der Kraftstoffmehrverbrauch einer zur ergreifenden Heizmaßnahme bewertet. Da dieser von der zu realisierenden Temperaturerhöhung des Stickoxid-Speicherkatalysators 4 abhängt, ist es vorteilhaft, wenn die beim aktuellen Betriebszustand maximal erreichbare Temperatur ermittelt wird. Die Aufwandskennzahl A wird dann etwa umgekehrt proportional zur maximal erreichbaren Temperatur des Stickoxid-Speicherkatalysators festgelegt. Dabei kann zusätzlich vorgesehen sein, den Betrag, um den die Entschwefelungstemperatur überschritten werden kann, getrennt zu bewerten. Die Aufwandskennzahl A wird dann umso niedriger sein, je weiter die maximal erreichbare Temperatur über der Entschwefelungstemperatur liegt. Vorzugsweise wird zudem die erforderliche Zeit zum Erreichen oder Überschreiten der Entschwefelungstemperatur ermittelt und zur Festlegung der Aufwandskennzahl A herangezogen. Vorteilhaft ist es, für die Zulässigkeit einer Entschwefelung einen Schwellenwert für die erforderliche Heizzeit festzulegen.

## Patentansprüche

1. Verfahren zum Betreiben eines im Abgassystem einer Brennkraftmaschine (1) eines Kraftfahrzeugs angeordneten Stickoxid-Speicherkatalysators (4), bei welchem dieser zur Beseitigung einer Deaktivierung durch Schwefelaufnahme auf oder über eine vorgebbare Entschwefelungstemperatur zur Durchführung einer Entschwefelung gebracht wird, wobei
- ein Freigabesignal für die Durchführung der Entschwefelung in Abhängigkeit vom Fahrzustand des Kraftfahrzeugs erzeugt wird und
- eine Dringlichkeit und ein Aufwand für die durchzuführende Entschwefelung ermittelt werden,
**dadurch gekennzeichnet, dass**
die Dringlichkeit durch einen Dringlichkeitsparameter (D) und der Aufwand durch einen Aufwandsparameter (A) quantifiziert werden und bei Vorliegen des Freigabesignals und Vorliegen einer vorgebbaren Beziehung zwischen Dringlichkeitsparameter (D) und Aufwandsparameter (A) die Entschwefelung durchgeführt wird, wobei der Dringlichkeitsparameter (D) mit wenigstens einer der folgenden Größen korreliert:
- ein Ausmaß einer Deaktivierung des Stickoxid-Speicherkatalysators (4),
- eine seit der letzten Entschwefelung verbrauchte Kraftstoffmenge,
- eine seit der letzten Entschwefelung zurückgelegte Fahrtstrecke,
- eine Anzahl unvollständiger Entschwefelungen
und der Aufwandsparamter mit wenigstens einer der folgenden Größen korreliert:
- eine maximal erreichbare Temperatur des Stickoxid-Speicherkatalysators (4),
- ein Energiebedarf für die Erreichung der Entschwefelungstemperatur,
- ein Kraftstoffmehrverbrauch zur Erreichung der Entschwefelungstemperatur.

2. Verfahren nach Anspruch 1,
**dadurch gekennzeichnet,**
**dass** im Fall einer bei der Quantifizierung des Dringlichkeitsparameters (D) berücksichtigten verbrauchten Kraftstoffmenge und/oder Fahrtstrecke diese mit einem Schwefelgehalt des Kraftstoffs gewichtet werden.

3. Verfahren nach Anspruch 1 oder 2,
**dadurch gekennzeichnet,**
**dass** die vorgebbare Beziehung zwischen Dringlichkeitsparameter (D) und Aufwandsparameter (A) in Form einer wechselseitigen funktionalen Abhängigkeit vorgegeben wird.

4. Verfahren nach einem der Ansprüche 1 bis 3,
**dadurch gekennzeichnet,**
**dass** das Freigabesignal gesetzt wird, wenn der Stickoxid-Speicherkatalysator (4) durch Änderung eines Brennkraftmaschinenbetriebsparameters auf oder über seine Entschwefelungstemperatur gebracht werden kann.

5. Verfahren nach einem der Ansprüche 1 bis 4,
**dadurch gekennzeichnet,**
**dass** für einen für das Setzen des Freigabesignals maßgebenden Brennkraftmaschinenbetriebsparameter zulässige und unzulässige Bereiche vorgesehen sind.

6. Verfahren nach einem der Ansprüche 1 bis 5,
**dadurch gekennzeichnet,**
**dass** bei Unterschreiten einer vorgebbaren Mindestfahrzeuggeschwindigkeit und/oder bei Unterschreiten einer vorgebbaren Mindestfahrstrecke seit der zuletzt durchgeführten Entschwefelung die Erzeugung des Freigabesignals unterbleibt.

## Claims

1. Method of operating a nitrogen oxide storage catalytic converter (4) in the exhaust gas system of an internal combustion engine (1) of a motor vehicle, whereby the latter is raised to or above a pre-settable desulphurisation temperature with a view to running a desulphurisation process in order to reverse a deactivation due to sulphur absorption, whereby
- an authorisation signal for running the desulphurisation process is generated depending on the driving state of the motor vehicle and
- an urgency and an energy expenditure are determined for the desulphurisation process to be run,
**characterised in that**
the urgency is quantified on the basis of an urgency parameter (D) and the energy expenditure is quantified by an energy expenditure parameter (A) and the desulphurisation process is run if the authorisation signal is present and if a pre-settable correlation between the urgency parameter (D) and energy expenditure parameter (A) exists, and the urgency parameter (D) is correlated with at least one of the following variables:
- a degree of deactivation of the nitrogen oxide storage catalytic converter (4),
- a quantity of fuel consumed since the last desulphurisation process,
- a distance travelled since the last desulphurisation process,
- a number of incomplete desulphurisation processes,
and the energy expenditure parameter is correlated with at least one of the following variables:
- a maximum achievable temperature of the nitrogen oxide storage catalytic converter (4),
- an energy requirement for achieving the desulphurisation temperature,
- a quantity of additional fuel that will be consumed in order to reach the desulphurisation temperature.

2. Method as claimed in claim 1,
**characterised in that**
if the quantity of fuel consumed and/or the driven distance is taken into account when quantifying the urgency parameter (D), they are weighted with a sulphur content of the fuel.

3. Method as claimed in claim 1 or 2,
**characterised in that**
the pre-settable correlation between the urgency parameter (D) and energy expenditure parameter (A) is pre-defined in the form of an interchangeable functional dependency.

4. Method as claimed in one of claims 1 to 3,
**characterised in that**
the authorisation signal is set if the nitrogen oxide storage catalytic converter (4) can be raised to or above its desulphurisation temperature by varying an operating parameter of the internal combustion engine.

5. Method as claimed in one of claims 1 to 4,
**characterised in that**
admissible and inadmissible ranges are provided as a basis for the internal combustion engine operating parameter used as a criterion for setting the authorisation signal.

6. Method as claimed in one of claims 1 to 5,
**characterised in that**
if there is a drop below a pre-definable minimum driving speed and/or if there is a drop below a pre-definable minimum driving distance since the last run desulphurisation process, generation of the authorisation signal is suppressed.

## Revendications

1. Procédé pour faire fonctionner un catalyseur d'accumulation d'oxyde azotique (4) agencé dans le système de gaz d'échappement d'un moteur à combustion interne (1) d'un véhicule automobile, dans lequel ledit catalyseur, en vue de procéder à une désulfuration, est amené à ou au-dessus d'une température de désulfuration prédéterminée afin d'éliminer une désactivation par absorption de soufre, dans lequel
- on génère un signal d'autorisation pour procéder à la désulfuration en fonction de l'état de circulation du véhicule automobile, et
- on détermine une urgence et une dépense pour la désulfuration à exécuter,
**caractérisé en ce que**
l'urgence est quantifiée par un paramètre d'urgence (D) et la dépense est quantifiée par un paramètre de dépense (A), et en présence du signal d'autorisation et en présence d'une relation prédéterminée entre le paramètre d'urgence (D) et le paramètre de dépense (A), on procède à la désulfuration, le paramètre d'urgence (D) étant en corrélation avec l'une au moins des grandeurs suivantes :
- une ampleur d'une désactivation du catalyseur d'accumulation d'oxyde azotique (4),
- une quantité de carburant consommée depuis la dernière désulfuration,
- un trajet parcouru depuis la dernière désulfuration,
- un nombre donné de désulfurations incomplètes,
et le paramètre de dépense est en corrélation avec l'une au moins des grandeurs suivantes :
- une température à atteindre au maximum par le catalyseur d'accumulation d'oxyde azotique (4),
- un besoin en énergie pour atteindre la température de désulfuration,
- un surplus de consommation de carburant pour atteindre la température de désulfuration.

2. Procédé selon la revendication 1,
**caratérisé en ce que**
dans le cas d'une quantité de carburant consommée et/ou d'un trajet parcouru pris(e) en compte lors de la quantification du paramètre d'urgence (D), ceux-ci sont pondérés avec une teneur en soufre du carburant.

3. Procédé selon la revendication 1 ou 2,
**caractérisé en ce que**
la relation prédéterminée entre le paramètre d'urgence (D) et le paramètre de dépense (A) est définie sous la forme d'une dépendance fonctionnelle réciproque.

4. Procédé selon l'une des revendications 1 à 3,
**caractérisé en ce que**
le signal d'autorisation est émis lorsque le catalyseur d'accumulation d'oxyde azotique (4) peut être amené à ou au-dessus de sa température de désulfuration par modification d'un paramètre de fonctionnement du moteur à combustion interne.

5. Procédé selon l'une des revendications 1 à 4,
**caractérisé en ce que**
il est prévu des plages admissibles et des plages inadmissibles pour un paramètre de fonctionnement du moteur à combustion interne, qui est décisif pour l'émission du signal d'autorisation.

6. Procédé selon l'une des revendications 1 à 5,
**caractérisé en ce que**
lors du passage au-dessous d'une vitesse minimale prédéterminée du véhicule et/ou lors du passage au-dessous d'un trajet parcouru minimal prédéterminé depuis la dernière désulfuration exécutée, la génération du signal d'autorisation est inhibée.
